# EUROPEAN PATENT APPLICATION

(11) **EP 2 672 768 A2**
(43) Date of publication of application: **11.12.2013**
(21) Application number: 13170880.2
(22) Date of filing: 06.06.2013
(51) Int. Cl.: H04W 68/00

(54) **Wireless mobile communication method**

(30) Priority: 08.06.2012 TW 101120767
(71) Applicant: Arcadyan Technology Corp., Hsinchu 300 (TW)
(72) Inventor: Fu, Huai-Lei, 236 New Taipei City (TW); Lin, Phone, 106 Taipei City (TW); Lin, Yi-Bing, 300 Hsinchu City (TW); Sung, Ying-Rong, 112 Taipei City (TW); Tsai, Hsin-Hann, 300 Hsinchu City (TW)
(74) Representative: Krauns, Christian

(57) **Abstract**

A wireless mobile communication method is provided. If a wireless mobile communication service arrives at a core network, the core network sends a paging signal to at least one macro base station and at least one Femto gateway. After the macro base station receives the paging signal, the macro base station pages the at least one mobile station within the coverage of the macro base station. The Femto gateway blocks the paging signal sent from the core network, so that the at least one Femto base station covered by the Femto gateway does not page the mobile station. After a destination mobile station receives the paging signal, the destination mobile station establishes a signaling connection, so that a call to a destination mobile station is established.

## Description

### TECHNICAL FIELD

The disclosure relates in general to a wireless mobile communication method.

### BACKGROUND

Mobile communication plays an important role in modern people's everydayness. People wish to make a phone call or get on the Internet through mobile communication by a mobile phone everywhere and anytime.

For the time being, universal mobile telecommunication system (UMTS) tries to satisfy people's needs in mobile communication. In general, a UMTS consists of three main components, namely, a user equipment (UE, which is also referred as a mobile station (MS)), a UMTS terrestrial radio access network (UTRAN) and a core network (CN).

The mobile station (MS) is a mobile station equipment for a user, such as a mobile phone. The user may make a phone call or get on the Internet through the MS.

UTRAN, which enables the mobile station to access the core network, includes a radio network subsystem (RNS). The RNS includes a radio network controller (RNC) and several macro base stations (MBS). The macro base station provides radio transmission and reception for one or more than one mobile phone. The RNC controls the use of radio resources.

The core network controls the exchange of signaling. The core network is coupled to an external network such as a public switched telephone network (PSTN such as an ordinary landline and mobile phone), an integrated services digital network (ISDN) and an Internet.

The mobile communication network includes many cells. Each base station has its respective coverage, system capacity, and output power. Based on the coverage (or output power), the base stations are further divided into different categories such as macro base stations, microcell base stations, Picocell base stations and Femto base stations.

In a dense mobile phone area (such as transport stations and shopping malls), the microcell base station and the Picocell base station may increase network transmission capacity. The Femto cell technology has the advantage of low establishment cost and can be used for supporting wireless mobile communication in an indoor environment. The Femto base station, having a smaller coverage, is mainly used for covering up the area not covered by other base stations. The Femto base station is normally used in a residential housing or a small business environment (such as office).

In general, the Femto base station is powered by battery whose duration can be effectively increased if power consumption and message overhead of the Femto base station can be reduced.

### SUMMARY OF THE DISCLOSURE

The disclosure is directed to a wireless mobile communication method. When a Femto gateway receives a paging signal sent from a core network, the Femto gateway blocks the paging signal and does not allow the paging signal to be sent to the Femto base station. So, the Femto base station does not send the paging signal to a destination mobile station. Instead, the paging signal is sent to a destination mobile station by a macro base station.

According to an exemplary embodiment of the present disclosure, a wireless mobile communication method is provided. If a wireless mobile communication service arrives at a core network, the core network sends a paging signal to at least one macro base station and at least one Femto gateway. After the macro base station receives the paging signal, the macro base station pages the at least one mobile station within the coverage of the macro base station. The Femto gateway blocks the paging signal sent from the core network, so that the at least one Femto base station covered by the Femto gateway does not page the mobile station. After a destination mobile station receives the paging signal, the destination mobile station establishes a signaling connection, so that a call to a destination mobile station is established.

The above and other contents of the disclosure will become better understood with regard to the following detailed description of the preferred but non-limiting embodiment(s). The following description is made with reference to the accompanying drawings.

### BRIEF DESCRIPTION OF THE DRAWINGS

FIG. 1 shows a system architecture diagram of a wireless mobile communication system according to an embodiment of the disclosure; and

FIG. 2 shows a flowchart of wireless mobile communication according to an embodiment of the disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION OF THE DISCLOSURE

In the present embodiment of the disclosure, a Femto gateway blocks a paging signal sent from a core network, so that a Femto base station does not send the paging signal to a destination mobile station, hence reducing the paging cost (for example, power consumption and message overhead) of the Femto base station.

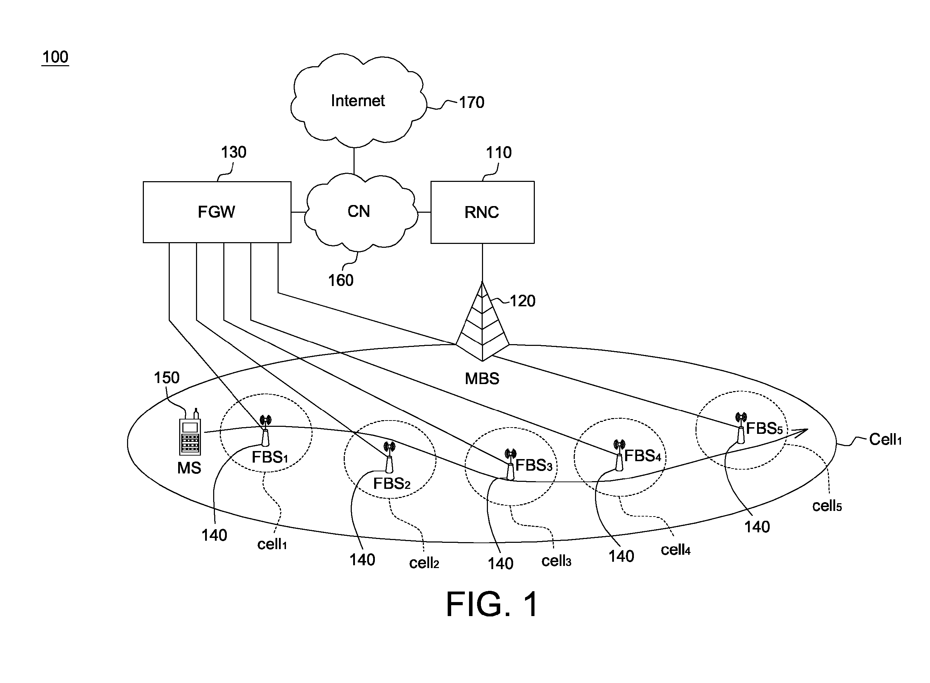

FIG. 1 shows a system architecture diagram of a wireless mobile communication system according to an embodiment of the disclosure. As indicated in FIG. 1, a wireless mobile communication system 100 includes a radio network controller 110, a macro base station (MBS) 120, a Femto gateway (FGW) 130, several Femto base stations (FBS) 140 and a mobile station (MS) 150. The radio network controller 110 and the Femto gateway 130 are connected to an Internet 170 through a core network (CN) 160.

FIG. 1 shows one radio network controller 110, one Femto gateway 130, one mobile station 150 and five Femto base stations 140, but the disclosure is not limited thereto. The quantity of each component is for exemplification purpose only, not for limiting the embodiments of the disclosure. In practical application, the quantity of each component is determined according to actual needs. For example, the wireless mobile communication system 100 may include more than one radio network controller 110, more than one Femto gateway 130, more than one mobile station and/or more than one Femto base station 140, and is still within the spirit of the disclosure.

The radio network controller 110 may be used as a communication interface between the core network 160 and the macro base station 120 for packet division, packet re-packaging, error detection and error recovery, so as to transmit and receive packets in the wireless mobile communication system. The radio network controller 110 also monitors the macro base station connected thereto and obtains the position information of the mobile station within the coverage of the macro base station monitored by the radio network controller 110. In the present embodiment of the disclosure, the operations and functions of the radio network controller 110 are not subjected to any specific restrictions as long as the requirements of the present embodiment of the disclosure are satisfied.

The macro base station 120 has a wider radio coverage (as indicated in Cell₁ of FIG. 1), but the Femto base station 140 has a narrower radio coverage (as indicated in cell₁∼cell₅ of FIG. 1). The Femto base station 140 is within the coverage of the macro base station 120. The macro base station 120 and the Femto base station 140 within its coverage both are operated in the same frequency band. Furthermore, the radio coverage of the macro base station 120 may cover the radio coverage of hundreds of Femto base stations 140.

If the mobile station 150 is concurrently within both the coverage of the macro base station 120 and the coverage of the Femto base station 140, the mobile station 150 will select the base station having signal intensity, and can thus be connected to the core network 160 through the one of the macro base station 120 and the Femto base station 140 with larger signal intensity. The mobile station 150 can further access an external Internet 170 through the core network 160.

Several Femto base stations within the coverage of the same macro base station will be grouped in the same location area. That is, the coverage of a macro base station is a location area, and an RNC can cover many location areas. Respective unique identification (ID) number is assigned to each location area, and is referred as a local area identification (LAI) number. Here, the same LAI is assigned to the coverage of the macro base station and the coverage of the Femto base station.

If the mobile station 150 moves across the coverage of different macro base stations and enters the current location area form a previous location area, then the mobile station will activate registration function and report the LAI of the current location area to the mobile database of the core network.

If the mobile station 150 moves within the coverage of the same macro base station but across the coverage of different Femto base station, then, the mobile station 150 does not need to register to the core network because the mobile station 150 does not exit the coverage of the current macro base station. That is, the mobile station 150 is still within the same location area and the LAI remains the same.

The macro base station 120 and/or the Femto base station 130 broadcasts its LAI through the broadcast control channel (BCCH), and the MS receives the broadcasting through the broadcast control channel for identifying the current LAI of the MS.

The call termination procedure is for routing a call to a destination MS. In the call termination procedure, the core network inquires the mobile data to obtain the LAI of the destination MS, and instructs all base stations of the LAI to call the destination MS. The core network further establishes a call to the destination MS through the base station which receives the paging response from the destination MS.

In prior art, the Femto base station pays paging cost (such as power consumption). In the present embodiment of the disclosure, the macro base station 120 sends the paging signal to the destination MS and the paging signal sent to the destination MS from the macro base station 120 is blocked by the Femto gateway 130, so that the Femto base station will not receive the paging signal. Thus, the Femto base station does not need to send the paging signal to the MS, and power consumption is further reduced.

In the present embodiment of the disclosure, the Femto base station does not need to send the paging signal to the MS. Instead, the MS receives the paging signal sent from the macro base station through the broadcast control channel.

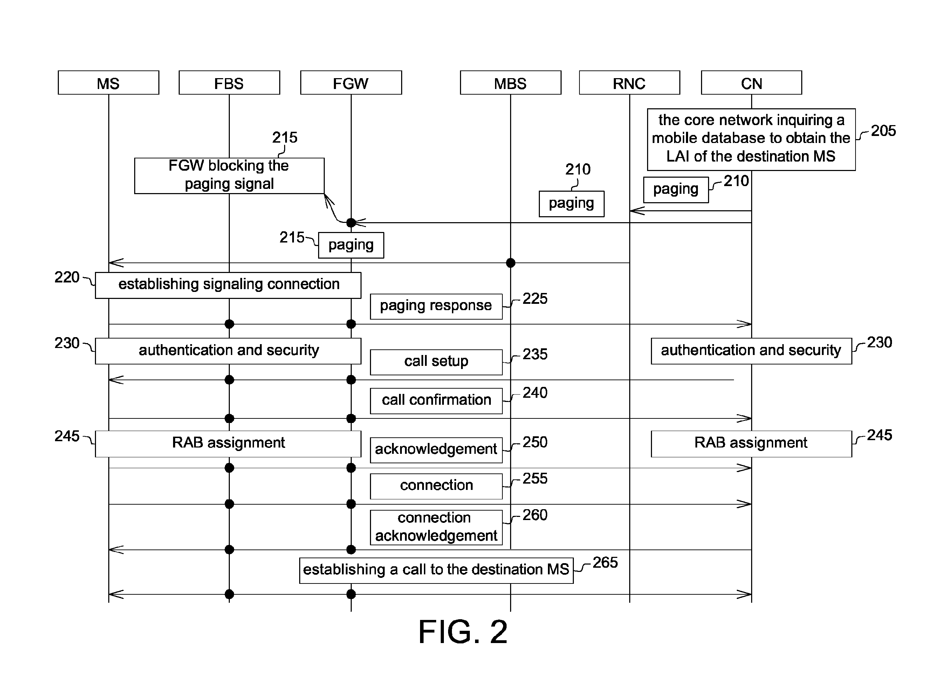

Referring to FIG. 2, a flowchart of wireless mobile communication according to an embodiment of the disclosure is shown. As indicated in FIG. 2, in step 205, if a wireless mobile communication service (whose destination is the MS) arrives at the core network 160, the core network inquires the mobile database to obtain the LAI of the destination MS. Here, the wireless mobile communication service, such as a call, includes telephony service and/or data transmission service (that is, connection to the Internet), or a combination thereof.

The core network instructs all base stations (including macro base stations and the Femto gateways) in the same location area with the destination MS to page the destination MS. In step 210, the core network sends the paging signal to the RNC (which services the base stations) and/or the Femto gateway.

In step 215, after the macro base station receive the paging signal, the macro base station establishes a paging and notification functional entity (PNFE) signal for sending the paging signal into the coverage of the macro base station, so as to page the destination MS. In step 215, the Femto gateway blocks the paging signal. That is, the Femto gateway will not send the PNFE signal. In the present embodiment, the Femto gateway blocks the paging signal, so that the Femto base station covered by the Femto gateway will not receive the paging signal, and will not send the paging signal to the MS within the coverage of the Femto base station. Consequently, power consumption of the Femto base station is further reduced.

In step 220, a signaling connection is established between the destination MS, the Femto base station (servicing the destination MS) and the Femto gateway for exchanging signaling.

If the MS receives the paging signal through a BCCH, the MS will check the ID of the strongest-signal-intensity base station stored in the MS. To put it in greater details, a base station intensity table is stored in an internal memory of the MS. The intensity list shows the signal intensities of the base stations which have ever serviced the MS. If the base station having largest signal intensity is the Femto base station, then the MS will listen to the signal sent by the Femto base station having largest signal intensity through the BCCH. The MS establishes a signaling connection for connecting to the Femto gateway through the Femto base station having largest signal intensity.

If the base station having largest signal intensity is the macro base station, then the MS establishes a signaling connection for connecting to the RNC through the macro base station.

In step 225, after the destination MS receive the paging signal, the destination MS sends a paging response signal to the Femto base station which service the destination MS, the Femto gateway and the core network.

In step 230, authentication and security protection are executed. For example, the core network executes authentication and security protection on the macro base station. If the macro base station passes the authentication and security protection executed by the core network, then the macro base station executes authentication and security protection on the destination MS, the Femto gateway and the Femto base station.

In step 235, the core network executes call setup on the destination MS. For example, the core network executes call setup on the Femto gateway, the Femto base station and the destination MS.

In step 240, in response to the call setup, the destination MS confirms the call. For example, the destination MS sends a call confirmation signal to the core network through the Femto gateway and the Femto base station.

In step 245, the core network performs a radio access bearer (RAB) assignment. RAB refers to a connection protocol between the mobile station and the core network. In step 250, destination MS sends an acknowledgement signaling to the Femto gateway, the Femto base station and the core network.

In step 255, a connection is established between the destination MS and the Femto gateway, the Femto base station and the core network.

In step 260, the core network sends a connection acknowledgement to confirm the connection between the core network and the destination MS, the Femto gateway, and the Femto base station.

In step 265, a call to the destination MS is established. That is, the call is routed to destination MS, so that the destination MS transmit data through the Femto gateway, the Femto base station and the core network. For example, the destination MS may be connected to an external Internet.

As disclosed in the above embodiments of the disclosure, the Femto base station does not need to page the MS because the macro base station executes MS paging. Therefore, the power consumed by the Femto base station for paging purpose is reduced (that is, the paging cost is reduced) without affecting MS paging.

## Claims

1. A wireless mobile communication method, comprising:
sending a paging signal to at least one macro base station and at least one Femto gateway by the core network if a wireless mobile communication service arrives at a core network;
paging the at least one mobile station within coverage of the macro base station by the macro base station after the macro base station receive the paging signal;
blocking the paging signal sent from the core network by the Femto gateway, so that the at least one Femto base station covered by the Femto gateway does not page the mobile station; and
after a destination mobile station receives the paging signal, establishing a signaling connection by the destination mobile station, so that a call to the destination mobile station is established by the core network.

2. The wireless mobile communication method according to claim 1, wherein,
if the wireless mobile communication service arrives at a core network, the core network inquires a mobile database to obtain a location area identification (LAI) number of the destination mobile station; and
the wireless mobile communication service comprises a telephony service and/or a data transmission service, or a combination thereof.

3. The wireless mobile communication method according to claim 1 or 2, wherein,
the core network instructs the macro base station in the same location area (LA) with the destination mobile station to page the destination mobile station.

4. The wireless mobile communication method according to any one of the preceding claims, wherein,
the core network sends the paging signal to a radio network controller and/or the Femto gateway in the same location area (LA) with the macro base station.

5. The wireless mobile communication method according to any one of the preceding claims, wherein,
after the macro base station receive the paging signal, the macro base station establishes a paging and notification functional entity (PNFE) signal and sends the paging signal into the coverage of the macro base station to page the destination mobile station.

6. The wireless mobile communication method according to any one of the preceding claims, wherein,
the Femto gateway does not send the paging and notification functional entity signal, so that the Femto base station covered by the Femto gateway does not receive the paging signal and does not send the paging signal into the coverage of the Femto gateway.

7. The wireless mobile communication method according to any one of the preceding claims, wherein,
a signaling connection is established between the destination mobile station, the Femto gateway and the Femto base station servicing the destination mobile station, for signaling exchange.

8. The wireless mobile communication method according to any one of the preceding claims, wherein,
after the destination mobile station receive the paging signal, the destination mobile station sends a paging response signal to the Femto base station servicing the destination mobile station, the Femto gateway and the core network.

9. The wireless mobile communication method according to any one of the preceding claims, wherein,
the core network and the destination mobile station execute authentication and security protection;
the core network executes a call setup to the destination mobile station; and
the destination mobile station, in response to the call setup, confirms establishment of the call.

10. The wireless mobile communication method according to any one of the preceding claims, further comprising,
the core network performs a radio access bearer assignment;
the destination mobile station sends an acknowledgement signaling to the Femto gateway, the Femto base station and the core network;
the destination mobile station, the Femto gateway, and the Femto base station are connected to the core network;
the core network sends a connection acknowledgement to confirm the connection between the core network and the destination mobile station, the Femto gateway and the Femto base station; and
the wireless mobile communication service is routed to the destination mobile station, so that the destination mobile station transmits data through the Femto gateway, the Femto base station and the core network.
